# EUROPEAN PATENT SPECIFICATION

(11) **EP 0 764 109 B1**
(45) Date of publication and mention of the grant of the patent: **08.04.1998**
(21) Application number: 95920185.6
(22) Date of filing: 15.06.1995
(51) Int. Cl.: B62K 15/00, B62K 3/00

(54) **A COLLAPSIBLE SCOOTER**
ZUSAMMENKLAPPBARER ROLLER
TROTTINETTE REPLIABLE

(30) Priority: 16.06.1994 IT CA940008
(43) Date of publication of application: 26.03.1997
(73) Proprietor: Cianchetti, Carlo, 91124 Cagliari (IT)
(72) Inventor: Cianchetti, Carlo, 91124 Cagliari (IT)
(74) Representative: Luppi, Luigi
(86) International application number: IB9500488
(87) International publication number: WO9534461

(56) References cited:
- EP-A- 0 064 141
- DE-A- 3 442 193
- DE-U- 9 302 169
- FR-A- 2 551 417

## Description

The invention concerns a collapsible scooter, which may be used as a vehicle also by adults expecially in city traffic and may be reduced in a space-saving configuration for minimum encumbrance when not in use.

Scooters known from the prior art comprise a footboard provided with a front wheel and a back wheel, a steering handle being connected to said footboard and rotatably supporting said front wheel around a horizontal axis: the steering handle is free to rotate only around a vertically oriented axis, in order to allow the user to control the direction of the vehicle.

These scooters are generally conceived as toys and, when not in use, they occupy substantially the same room as a small bike.

DE-A-3442193 discloses a non-motorized vehicle in the form of a scooter, comprising a footboard substantially similar to a "skateboard" forwardly provided with an upwardly extending handle rotatable around hinge means between an upward position and a downward position. A front pair of rollers supported to the footboard is provided with a self-directioning ball system. Thus, it is not possible to control the direction of the vehicle, particulalry along curved trajectories.

EP-A-0064141, which is considered the closest prior art, discloses a scooter of this type, showing hinge means interposed between the footboard and the steering bar for swinging the steering bar around an horizontal axis from an upper position to a lower collapsed position in which the steering bar is oriented substantially parallel to the footboard. The collapsed position of this know scooter does not allows a great reduction of space to be achieved, in fact in this position the scooter occupies substantially the same space as a suitcase: this is due not only to the motor unit fixed to the footboard, but also to the position of the hinge means, which is positioned over the front end of the footboard at a considerable distance thereof.

DE-U-9302169 discloses a collapsible scooter, which, owing to a complex articulated structure, may be reduced to a minimal collapsed configuration. In this type of scooter, however, the footboard is divided in two parts pivotally joined together by hinge means, which causes a considerable weakness of footboard and thus implies hight risks of failures.

Also FR-U-2551417 disclose a collapsible scooter, having an open configuration in which the fooboard is upwardly inclined in the direction of movement so that its front end is higher than the respective back end. Hinge means are provided at the front end of the board in order to allow the steering handle to be brought to a collapsed configuration, said hinge menas being located above the horizontal axis around which a front wheel is rotatably supported. This originates considerable drawbacks mainly consisting in discomfort induced by the inclined position of the footboard.

This prior art needs for considerable improvements with a view to eliminating the above-mentioned drawbacks.

The technical problem to be solved by the present invention is therefore to find a collapsible scooter which can be reduced to a minimal configuration while mantaining a considerably resistent structure and great comfort for the user.

A particular aspect of the technical problem is to be regarded as providing a scooter which can be easily carried by hand and transported when reduced in the closed configuration.

A further particular aspect of the technical problem is to provide a scooter which allows an acceptable comfort also when used on slightly uneven ground, such as pavements, or the like.

Still another particular aspect of the technical problem is to provide a scooter having an improved stability.

Still another particular aspect of the techincal problem is to provide a scooter which allows easily driving and avoiding sudden obstacles along the route.

According to one aspect of the present invention, there is provided a collapsible scooter, comprising a footboard having front and back wheels and a steering bar connected to said footboard and rotatably joined to the front wheel around an horizontal axis, hinge means being interposed between said steering bar and said footboard for swinging said steering bar around an horizontal axis from a substantially upright position in the open configuration, to a lower position in the closed configuration in which the steering bar is oriented in a direction substantially parallel to the footboard, characterised in that, said hinge means is located substantially coaxially with respect to said horizontal axis and in that an oscillating stabilizing frame is associated to said steering bar. around an horizontal axis from a substantially upright position in the open configuration, to a lower position in the closed configuration in which the steering handle is oriented in a direction substantially parallel to the footboard.

According to a preferred embodiment, stabilizing means are provided for stabilizing the steering handle in the open configuration.

According to a further preferred embodiment, said stabilizing means preferably comprises a swinging frame, having the shape of an open rectangle, hinged at its lower ends to the footboard and provided with an upper section slidably connected to the steering handle; said swinging frame being further connected to said footboard by a pair of articulated orienting levers, equipped with removable fixing means for fixing the open position of the steering handle.

According to a further preferred embodiment, said hinge means are backwardly located onto said footboard at a distance, preferebly around a few centimeter, from the horizontal axis around which the front wheel is rotatably supported to said steering wheel.

According to a further preferred embodiment, said scooter is provided with a front wheel and a back wheel, or with a front wheel and twin back wheels.

According to a further preferred embodiment, said scooter is equipped with a hand brake, equipped with a brake handle mounted onto said steering handle and acting on the back wheel or wheels.

According to a further preferred embodiment, the footboard is provided with an intermediate depression.

Advantages offered by the present invention are: possibility of positioning the steering handle along the footboard in the closed configuration, thus obtaining a considerable reduction in space when the scooter is not in use; great comfort in driving and versatility; easy transferability of the scooter in the closed configuration; great stability of the vehicle, particularly in the twin back wheel configuration and/or when the depression of the footboard is adopted; prossibility of reducing the time of locomotion with less efforts if compared to normal deambulation; easy parking of the vehicle.

Further advantages and features of the invention will result from the following description, given by way of example, referred to six sheets of drawings, in which:
Figure 1 is a side view of a first embodiment of a collapsible scooter, in the open configuration;
Figure 2 is a front view of Figure 1 showing an embodiment having one back wheel;
Figure 3 is a section, in an enlarged scale, taken along line III-III of Figure 2;
Figure 4 is an interrupted front view of the upper portion of a steeering handle in a further embodiment of a scooter having twin back wheels;
Figure 5 is a partially interrupted section taken along line V-V of Figure 1;
Figure 6 is a side view of the collapsible scooter shown in Figure 1, but in the closed configuration;
Figure 7 is a top view of the collapsible scooter in the closed configuration;
Figure 8 is a side view of a collapsible scooter in a further embodiment, showing a footboard having an intermediate section very close to the ground to improve stability;
Figure 9 is a bottom view of Figure 9, showing the scooter in the closed configuration;
Figures 10, 11 are interrupted top view of the backward end of an embodiment of the scooter in which twin back wheels are mounted;
Figures 12, 13 are top views corresponding to Figures 11, 12, showing the respective scooters in the closed configurations;
Figure 14 is an interrupted schematic top view of the front part of the vehicle showing the maximum angular deviation of the shaft supporting the front wheel coupled to respective guide means;
Figure 15 is an enlarged view of one of the two guide means in which the end of the front shaft is inserted;
Figure 16 is an enlarged section taken along line XVI-XVI of Figure 19 in which the steering means are shown in a front view;
Figures 17, 18 are further embodiments of the ends of the front shaft;
Figure 19 is a section taken along line XIX-XIX of Figure 1;
Figure 20 is an enlarged and interrupted section taken along line XX-XX of Figure 2;
Figure 21 is an enlarged section taken along line XXI-XXI of Figure 5.

A collapsible scooter S has a front wheel 1 and at least one back wheel 2, both wheels being provided with tyres and being pivotally connected to a footboard 3 by means of a respective front shaft 1a and back shaft 2a. A steering handle 5, provided with a steering bar 6 at its top end, is pivotally connected to the front shaft 1a; the steering handle 5 may be equipped with a brake actioning lever 19 controlling a pair of brake jaws 21 acting on the back wheel 2 by means of a cable 20.

The front part of the vehicle S is equipped with a swinging frame 4 shaped as an open rectangle, said frame having its lower ends hinged to respective pins 4c laterally projecting from the footboard 3 and being provided with side bars 4b supporting a top section 4a having a hole slidably coupled with the steering bar 6passing through it.

In order to better maintain the stability of the vehicle and to prevent stumbling on the front wheel 1 when the wheight of the driver is displaced forwardly, the swinging frame 4 is hinged to the footboard a few centimeters behind the front wheel 1.

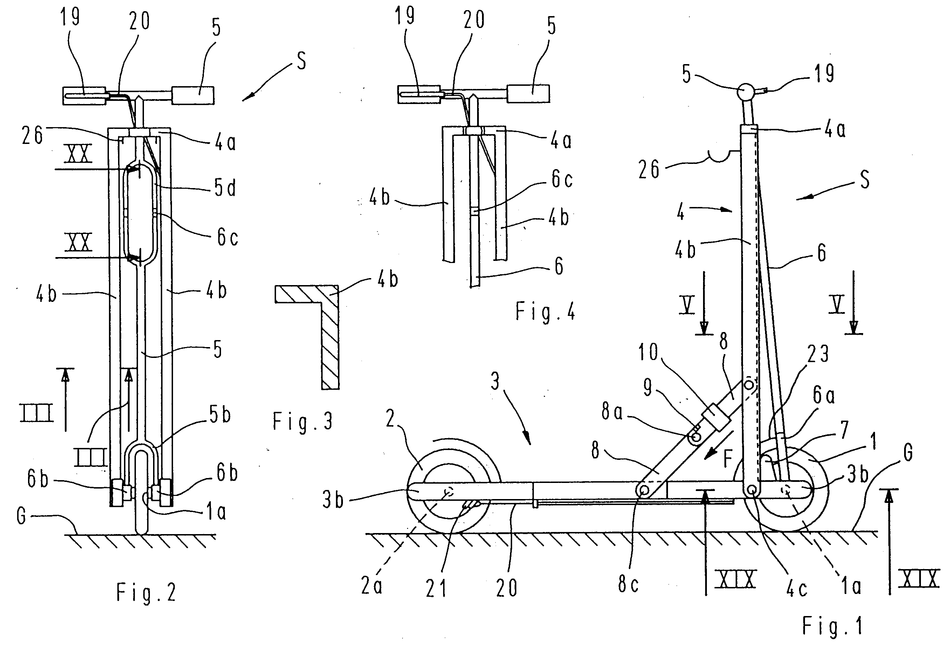

As shown in Figure 3, the transverse cross-section 4b of the swinging frame 4 is L-shaped in order to further reduce the encumbrance of the scooter S in the closed configuration.

The cross-section of the top section 4a may have a square shape, so that the hole provided in it for the steering bar 6 has an internal surface serving as a guide for said steering bar.

The steering bar 6 is provided with a lower end having the shape of a fork 6a coupled with opposite ends of the shaft 1a by the interposition of hinge means 6b.

Between the side bar 4b of the swinging frame 4 and the footboard 3, articulated levers 8 are interposed, in order to stabilize the steering handle 6 at a substantially upright position in the open configuration, at an angle of about 90° with respect to the footboard 3. The levers 8 have common ends hinged to the same articulating pin 8a and independent ends individually hinged respectively to a side-bar pin 8b projecting internally from the side bar 4b and to a footboard pin 8c projecting outwardly from the footboard 3.

The footboard 3 is laterally provided with indentations 3a wide and long enough to serve as seats receiving the articulated levers 8 when the scooter is in the closed, or collapsed, configuration.

The levers 8 are provided with fixing means comprising a notch 9 of one lever 8 cooperating with a corresponding hooked appendix of the other lever 8, in order to determine the open position of the steering bar 5: a sliding collar 10 may be moved in the direction of arrow F in order to avoid back motion of the articulated levers 8 when the open configuration has to be maintained.

The front end of the footboard 3 is equipped with a pair of blocks 7 preventing a forward orientation of the steering handle and of the swinging frame 4, in cooperation with the articulated levers 8.

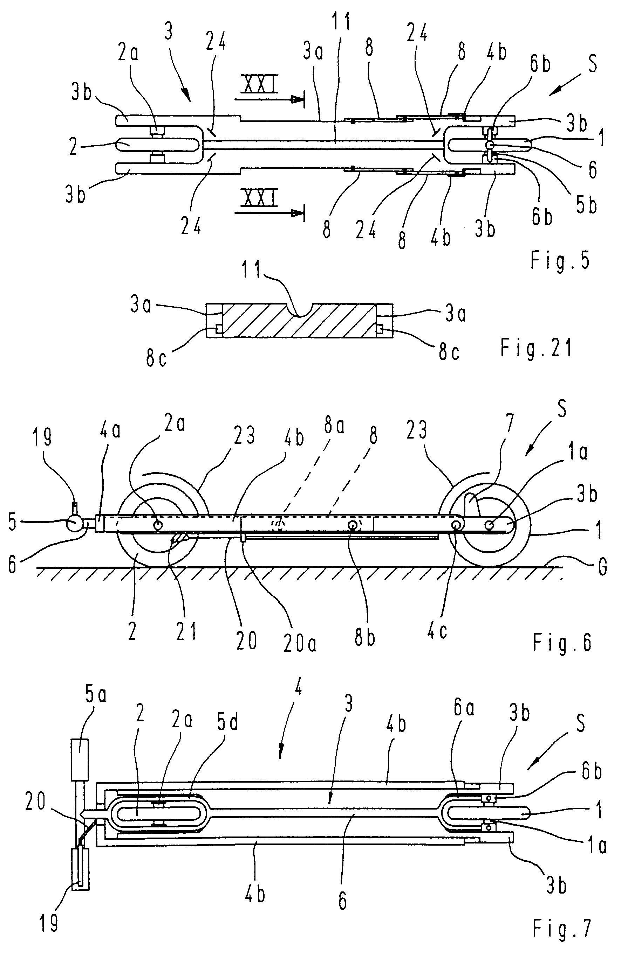

The footboard 3 may also be advantageously equipped with removable front and back mudguard 23, each mudguard having connecting ends insertable into a pair of corresponding converging slots 24 (Figure 5) provided for on the footboard 3, in the vicinity of the front and back wheels 1, 2.

The top section 4a of the swinging frame 4 may be backwardly provided with service hook means 26, preferably a pair of hooks, suitable for carrying a bag or a briefcase.

As shown in Figure 2, the steering bar 6 may have an intermediate loop-portion 6d, having the shape of an oval ring, wide enough to serve as a seat for the back wheel 2 when the swinging frame 4 and the steering handle are in the collapsed configuration (Figure 6).

The loop-portion 6d consists of a bifurcation of the steering bar 6 in two opposite bars joined together before and after the portion of the steering bar in which interference with the back wheel 2 might occur in the collapsed position.

It is to be inderstood that the loop-portion 6d may be omitted, thereby resulting a steering bar 6 having a substantially rectilinear axial development: this may occur without any waste of space in the collapsed position, if the scooter is equipped with twin back wheels 2b, provided that the distance D between the opposite facing surfaces of the twin wheels 2b is greater than the diameter of the steering bar 5.

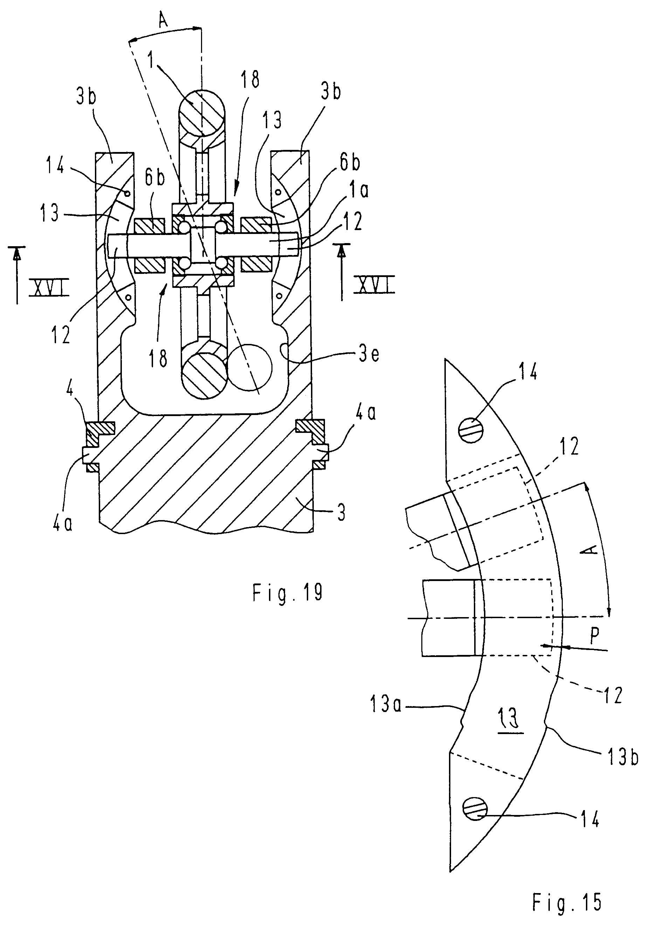

The latter embodiment is shown in Figures 4, 10 to 13.

The adoption of twin back wheels 2b, i. e. a pair of parallel wheels rotatably supported by a common shaft, or by aligned shafts, increases the stability of the vehicle.

As shown in Figure 20, the loop-portion 6d of the steering bar 6, may have a pair of forwardly projecting C-shaped deviations 6c, located at a distance from the front shaft 1a corresponding to the distance between the front shaft 1a and the back shaft 2a, said deviations backwardly defining corresponding indentations seving as seats for lodging the back shaft 2a when the steering bar 6 is put down on the footboard 3 in the collapsed configuration.

It is to be understood that only one indentation defined by a corresponding deviation 6c may be provided for, as shown in Figure 4, when the steering bar 6 is not equipped with the loop-portion 6d.

As shown in Figures 5 and 21, the top face of the footboard 3, i.e. the part of the footboard facing the steering bar 6 and the swinging frame 4, has a longitudinal groove 11, extending centrally in alignement with the front wheel 1 and the back wheel 2 and serving as a seat for the steering bar 6 when the latter is put down on the footboard 3 in the collapsed configuration.

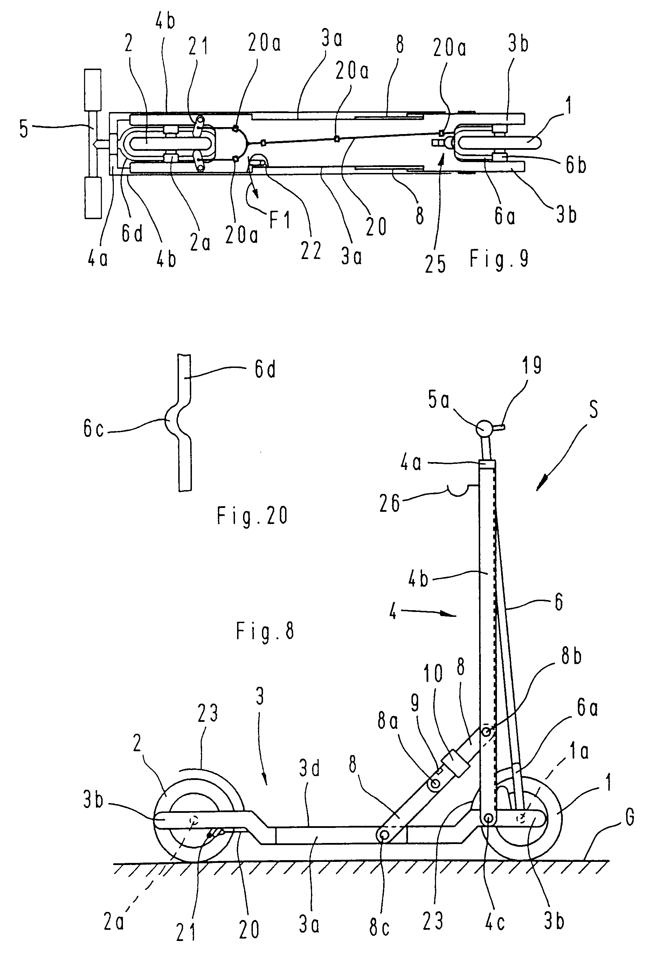

As shown in Figure 9, the lower face of the footboard 3 is equipped with locking means for locking the vehicle in the collapsed configuration, said locking means comprising a swinging locking tongue 22 which can be made to rotate in the direction of arrow F1 in order to insert its free end into a corresponding slot provided for in the the side bar 4b of the swinging frame 4.

The above-described locking means 22 allows very easy handling and/or parking of the scooter S when it is reduced in its collapsed configuration, by simply holding it by the steering handle 5a.

The lower part of the footboard 3 may be equipped with a stop means, for example a stop lever 25 suitable for engagement with the periphery of the front wheel 1 when parking the vehicle S.

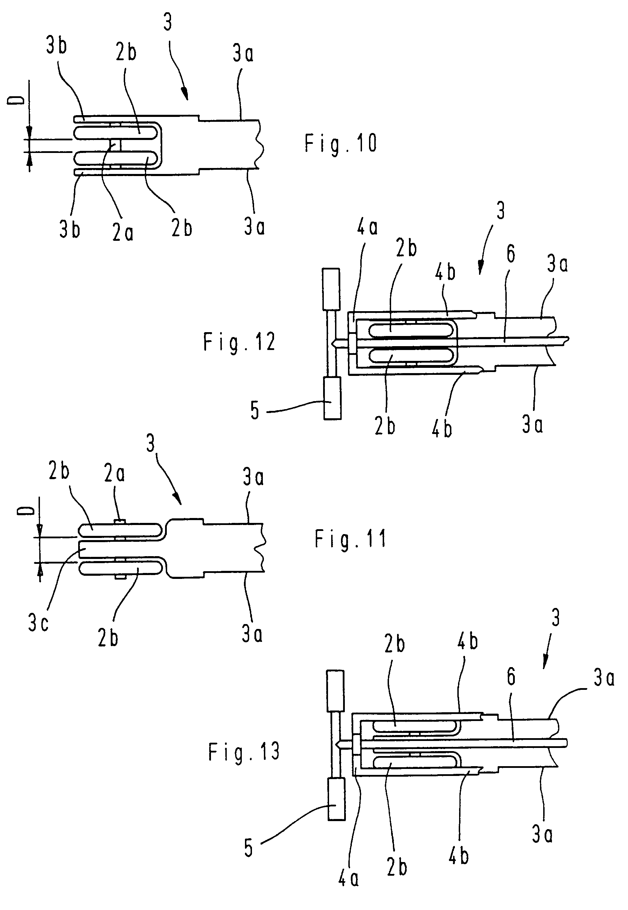

As shown in Figure 10, the twin wheels 2b may be rotatably mounted on the fork-shaped back end 3b of the footboard 3, or, as shown in Figure 11, on a slim appendix 3c backwardly projecting from the footboard 3.

The front end of the footboard 3 may be analogously fork-shaped and is therefore indicated by the same reference.

As shown in Figure 8, the footboard 3 may have a depression 3d to reduce the difference in height between the driver's foot and the ground G, e.g. from about 12 cm to about 7 cm. It is to be understood that, in this case, the groove 11 may also be limited to the non-depressed end of the board 3.

In this embodiment, more comfort is achieved and balance is more easily kept during runninig.

The cable 20 of the brake 21 may be guided by guiding elements 20a, or even inserted into a further groove, not shown, of the footboard 3, 3a.

Although the scooter may have a steering handle 6 which cannot be swung around its longitudinal axis, it is preferred that steering means be interposed between the lower end of the steering bar 6and the front end of the footboard 3.

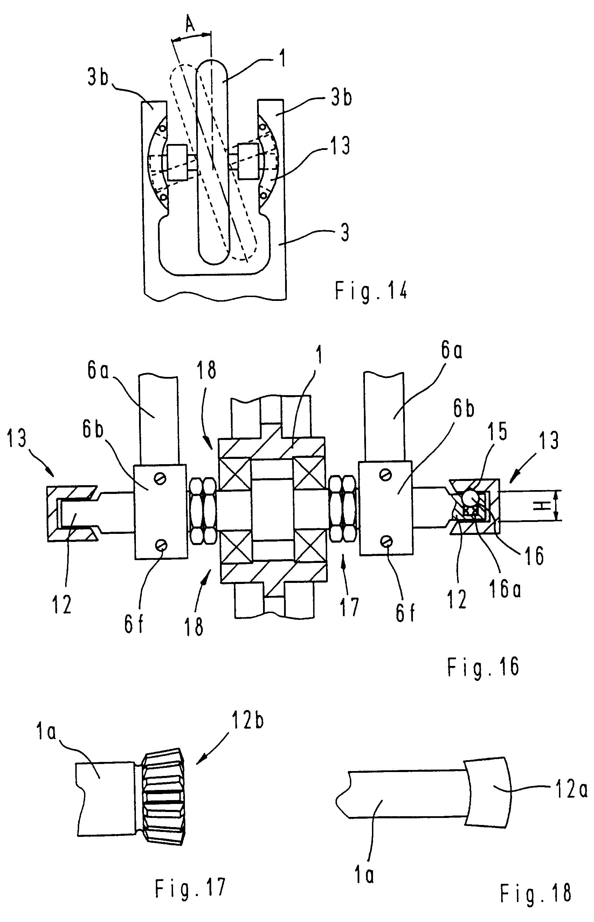

As shown in Figures 16 and 19, steering means comprises bilateral pairs of opposed guide means 13, internally inserted into the front end of the footboard 3, each pair of guide means serving as a seat for slidably coupling into it of a corresponding flat end 12 of the shaft 1a on which the front wheel 1 is rotatably mounted by means of bearings 18.

As shown in Figure 15, guide means 13 have an arched configuration defining the steering angle A of the vehicle S, preferably in the range of about 20° to about 30°: interference between the front wheel 1 and the front end of the footboard 3 must be avoided. For this purpose, the front end of the footboard may be provided with an U-shaped indentation 3e by means of which a maximum orientation of the front wheel 1 is achieved.

Practically, it has been found that a steering range of at least 60° (30° left + 30° right) is advisable, while a range of about 40° seems to be sufficient; the choice of the steering angle A determines the width of the footboard: the narrower the steering angle A, the slimmer the footboard 3.

It is to be observed that the above-described steering means do not prevent the steering bar 6 and the swinging frame 4 associated thereto from being rotated around respective hinge means when the vehicle is to be reduced in the collapsed configuration.

More particularly, the ends 12 of the front shaft 1a, around which the front wheel 1 rotates, are engaged with internal surfaces of the guide means 13: said guide means are radially delimited by an inner cylindrical surface 13a and an outer cylindrical surface 13b, coaxially disposed and having their axis located at the intermediate section of the front shaft 1a, said axis therefore passing through the centre of the front wheel 1.

The space radially delimited by the inner and outer cylindrical surfaces 13a, 13b and defined between the upper and lower opposed internal surfaces of said guide means 13 has the shape of a pair of sections taken from an ideal cylinder having an internal height H such that the flat ends 12 of the shaft 1a fit exactly into it.

The particular shape of said space internally defined by the guide means 13 is such that the orientation of the wheel 1 by means of the steering handle 5 (to the right and to the left) occurs practically without any displacement in a backward or forward direction with respect to the footboard 3.

Therefore the peripheral play P (Figure 15) between the ends 12 and the outer cylindrical surface 13b must be kept minimal.

As shown in Figure 18, a better contact between the ends of the shaft 1 and the guide means 13 is obtainable by providing the shaft 1 with ends 12a shaped as an arched T.

As shown in Figure 16, the flat end 12 of the shaft 1a may be equipped with a seat for a ball 16 running onto an arched groove 15 of the correponding internal surface of the guide means 13.

The ball 16 protrudes from the end 12 on which is mounted because of the action of an upwardly directed load provided by spring means 16a located under the ball 16.

The ball may therefore be depressed to allow the insertion of the end 12 of the shaft 1a into the internal cylindrical space of said guide means 13.

As an alternative, when the spring means 16a are not provided for, a lower part of said guide means 13 should be removably connected with the corresponding upper part.

Each cylindrical volume is closed at its ends by a L-shaped lamina, which allows the guide means 13 to be fixed to the footboard 3 by screws 14, said L-shaped lamina limiting the maximum angular excursion A of the steering bar 6 and of the shaft 1 connected to it.

It is to be noted that, in a simplier alternative, the angular excursion may be limited by the screws 14 passing through the cylindrical volume of the guiding means 13.

In a further embodiment, shown in Figure 17, the or each end 12b of the shaft 1a is equipped with a toothed wheel meshing with a toothed sector (not shown) provided for in the upper part, i. e. the load-supporting part, of the guiding means 13; while the lower parts of said guiding means 13 is smooth and removable since said lower parts are not engaged with the toothed wheel 12a.

The front shaft 1a should be divided in two aligned parts, rotatably coupled, so as to allow independent rotations of the or each toothed wheel 12a.

As an alternative, the or each toothed wheel 12a may be rotatably mounted on the front shaft 1a.

Between the bearings 18 and the hinge means 6b of the fork 6a pair of screw bolts 17 is interposed to fix the axial position of the wheel 1 with respect to the shaft 1a.

The hinge means 6b comprises a pair of ring-shaped elements, bilaterally slidably coupled with the shaft 1a at opposite sides with respect to the wheel 1, each ring-shaped element being formed by two half-ring parts encompassing the shaft 1a and interconnected by a pair of screws 6f.

Said ring-shaped elements may be replaced by bushes.

The vehicle S may be manufactured in Aluminum or light alloy. List of main components:
- 1, 1a: front wheel and respective front shaft;
- 2 ,(2b), 2a,: back wheel(s) and respective back shaft;
- 3, 3a, 3b: footboard, depression, fork-shaped ends of the footboard;
- 4, 4a, 4b,: swinging frame with respective side bars and top section;
- 5,: steering handle;
- 6, 6a, 6b, 6c, 6d, 6f,: steering bar, fork, hinge means, deviation, annular ring, screw;
- 7,: preventing forward rotation blocks;
- 8, 8a, 8b, 8c,: articulated levers and respective hinge pins;
- 9,: notch with correponding hooked appendix;
- 10,: sliding collar;
- 11,: longitudinal groove;
- 12, 12a, 12b: flat ends, arched T-shaped ends, toothed ends of the front shaft 1a;
- 13,: guide means;
- 14,: screws;
- 15,: arched groove;
- 16, 16a,: ball and respective spring means;
- 17,: pairs of screw bolts;
- 18,: bearing;
- 19,: brake actioning lever:
- 20,: cable of the brake;
- 21,: jaws of the brake;
- 22,: locking means;
- 23,: mudguards;
- 24,: slots for positioning the mudguards;
- 25,: lever blocking the front wheel 1;
- 26,: service hooks.

In practice, execution details, dimensions, shape, materials and minor features may be different from, but technically equivalent to, that described above, without departing from the scope of the present invention as defined by the following claims.

## Claims

1. A collapsible scooter (S), comprising a footboard (3, 3a) having front and back wheels (1, 2, 2b) and a steering bar (6, 6a, 6b, 6c, 6d, 6f) connected to said footboard (3, 3a) and rotatably joined to the front wheel (1) around an horizontal axis, hinge means (6b, 4c) being interposed between said steering bar (6, 6a, 6b, 6c, 6d, 6f) and said footboard (3, 3a) for swinging said steering bar (6, 6a, 6b, 6c, 6d, 6f) around an horizontal axis from a substantially upright position in the open configuration, to a lower position in the closed configuration in which the steering bar (6, 6a, 6b, 6c, 6d, 6f) is oriented in a direction substantially parallel to the footboard (3, 3a), characterised in that, said hinge means (6b, 4c) is located substantially coaxially with respect to said horizontal axis and in that an oscillating stabilizing frame (4, 4a, 4b, 4c) is associated to said steering bar (6, 6a, 6b, 6c, 6d, 6f).

2. A collapsible scooter according to claim 1, wherein said hinge means comprises a pair of ring (6b) elements encompassing a front shaft (1a)lying on said horizontal axis and located at opposite sides from said front wheel (1) rotatably coupled with said shaft (1a).

3. A collapsible scooter according to any preceding claim, wherein said stabilizing frame is provided with stabilizing means (8, 8a, 8b, 8c, 9, 10) for fixing the steering bar (6, 6a, 6b, 6c, 6d, 6f) in the open configuration.

4. A collapsible scooter according to claim 3, wherein said swinging frame (4, 4a, 4b, 4c) is pivotally connected at its lower ends (4c) to the footboard (3, 3a) and is provided with an upper section (4a) slidably connected to the steering bar (6, 6a, 6b, 6c, 6d, 6f).

5. A collapsible scooter according to claims 1 and 4, wherein said hinge means further comprises at least one hinge pin (4c), pivotally connecting the lower end of said swinging frame (4, 4a, 4b, 4c) to said footboard (3, 3a).

6. A collapsible scooter according to claim 3, wherein said stabilizing means comprises a pair of articulated orienting levers (8, 8a, 8b), equipped with removable fixing means (9, 10) for fixing the open position of the steering bar (6, 6a, 6b, 6c, 6d, 6f).

7. A collapsible scooter according to claim 6, wherein said fixing means comprises a notch (9) provided for on one of said orienting levers (8), the other orienting lever being provided with a hooked appendix cooperating with said notch for preventing forward rotation of the steering bar (6, 6a, 6b, 6c, 6d, 6f).

8. A collapsible scooter according to claim 7, wherein said fixing means further comprises a sliding collar (10).

9. A collapsible scooter according to claim 5, wherein said at least one hinge pin (4c) is backwardly located onto said footboard (3, 3a) at a predetermined distance from the front shaft (1a).

10. A collapsible scooter according to claim 3, wherein the footboard (3, 3a) is laterally provided with indentations (3a) wide and long enough to serve as seats receiving the stabilizing means (8, 8a, 8b, 8c, 9, 10) when the scooter is in the collapsed configuration.

11. A collapsible scooter according to any one of claims 1 to 10, wherein said scooter is provided with a front wheel (1) and twin back wheels (2b).

12. A collapsible scooter according to any preceding claims, wherein said steering bar (6) has at least one forwardly projecting C-shaped deviation (6c), located at a distance from the front shaft (1a) corresponding to the distance between the front shaft (1a) and the back shaft (2a), said deviation backwardly defining a corresponding indentation seving as a seat for lodging the back shaft (2a) when the steering bar (6) is put down on the footboard (3, 3a) in the collapsed configuration.

13. A collapsible scooter according to claim 12 when depending from any of claims 1 to 10, wherein said steering bar (6) is provided with an intermediate portion (6d), serving as a seat for the back wheel (2) when the swinging frame (4) and the steering bar (6) are in the collapsed configuration.

14. A collapsible scooter according to claim 13, wherein said intermediate portion comprise a loop-element (6d).

15. A collapsible scooter according to any preceding claims, wherein the top face of the footboard (3,3a), has a longitudinal groove (11), extending centrally in alignement with the front wheel (1) and serving as a seat for the steering bar (6) when the latter is put down on the footboard (3, 3a) in the collapsed configuration.

16. A collapsible scooter according to any preceding claims, wherein a hand brake (19, 20, 21) is provided, comprising a brake handle (19) mounted onto said steering handle (5) and acting on the back wheel(s) (2, 2b) via jaws (21) and cable (20).

17. A collapsible scooter according to any preceding claims, wherein the footboard is provided with an intermediate depression (3a).

18. A collapsible scooter according to any preceding claim, wherein stop means are provided, comprising a lever designed to peripherally interfere with the front wheel (1).

19. A collapsible scooter according to any preceding claims, wherein said steering means comprises bilateral pairs of opposed guide means (13), internally inserted into the front end of the footboard (3, 3a), each pair of guide means serving as a seat for slidably coupling into it of a corresponding end (12, 12a, 12b) of the front shaft (1a)

20. A collapsible scooter according to claim 19, wherein said guide means (13) has an arched configuration defining the steering angle (A) of the vehicle (S), preferably, for each side, in the range of about 20° to about 30°.

21. A collapsible scooter according to claim 20, wherein said guide means (13) are radially delimited by an inner cylindrical surface (13a) and an outer cylindrical surface (13b), coaxially disposed and having their axis located at the intermediate section of the shaft (1a).

22. A collapsible scooter according to claim 20, or 21, wherein the space radially delimited by said inner and outer cylidrical surfaces (13a, 13b) and defined between the opposed internal facing surfaces of said guide means (13, 13a, 13b) has the shape of a pair of hollow sections taken from an ideal cylinder having an internal height (H) such that the flat ends (12, 12a, 12b) of the front shaft (1a fit) exactly into it.

23. A collapsible scooter according to claim 22, wherein the shape of said space internally defined by the guide means (13, 13a, 13b) is such that peripheral play (P) between the ends (12, 12a, 12b) and the outer cylindrical surface (13b) is kept minimal.

24. A collapsible scooter according to claim 19, wherein the front shaft (1) has flat ends (12, 12a), preferably shaped as an arched T.

25. A collapsible scooter according to claim 24, wherein the flat end (12, 12a) of the front shaft (1a) may be equipped with a seat for a ball (16) running onto an arched groove (15) of the correponding internal surface of the guide means (13), said ball (16) being preferably cooperating with spring means (16a) below it.

26. A collapsible scooter, according to claim 19, wherein said front shaft (1a) may be equipped with a toothed wheel end (12b) meshing with a toothed sector provided for in the upper part of the guiding means (13).

## Patentansprüche

1. Zusammenklappbarer Tretroller (S), der ein Fußbrett (3, 3a) mit Vorder- und Hinterrädern (1, 2, 2b) und eine mit dem Fußbrett (3, 3a) verbundene und dem Vorderrad (1) um eine waagrechte Achse drehbar angegliederte Lenkstange (6, 6a, 6b, 6c, 6d, 6f) umfaßt, sowie eine zwischen der Lenkstange (6, 6a, 6b, 6c, 6d, 6f) und dem Fußbrett (3, 3a) angebrachte Gelenkeinrichtung (6b, 4c), um die Lenkstange (6, 6a, 6b, 6c, 6d, 6f) um eine waagrechte Achse aus der im wesentlichen aufrechten Position im offenen Zustand in eine tiefere Position im geschlossenen Zustand zu schwenken, in dem die Lenkstange (6, 6a, 6b, 6c, 6d, 6f) in einer Richtung angeordnet ist, die im wesentlichen parallel zum Fußbrett (3, 3a) ist, **dadurch gekennzeichnet, daß** die Gelenkeinrichtung (6b, 4c) im wesentlichen koaxial in Hinsicht auf die waagrechte Achse angeordnet ist, und daß ein stabilisierender Schwingrahmen (4, 4a, 4b, 4c) mit der Lenkstange (6, 6a, 6b, 6c, 6d, 6f) verbunden ist.

2. Zusammenklappbarer Tretroller nach Anspruch 1, bei dem die Gelenkeinrichtung ein Paar Ringelemente (6b) umfaßt, die eine vordere Welle (1a) umgeben, die auf der waagrechten Achse liegen und auf gegenüberliegenden Seiten von dem mit der Welle (1a) drehbar gekoppelter Vorderrad (1) angeordnet sind.

3. Zusammenklappbarer Tretroller nach einen der vorangehenden Ansprüche, bei den der stabilisierende Rahmen mit einer stabilisierenden Einrichtung (8, 8a, 8b, 8c, 9, 10) ausgestattet ist, um die Lenkstange (6, 6a, 6b, 6c, 6d, 6f) im offenen Zustand zu fixieren.

4. Zusammenklappbarer Tretroller nach Anspruch 3, hei dem der Schwungrahmen (4, 4a, 4b, 4c) an seinen unteren Enden (4c) schwenkbar mit dem Fußbrett (3, 3a) verbunden ist und mit einem oberen Abschnitt (4a) ausgestattet ist, der verschiebbar mit der Lenkstange (6, 6a, 6b, 6c, 6d, 6f) verbinden ist.

5. Zusammenklappbarer Tretroller nach den Ansprüchen 1, und 4, bei dem die Gelenkeinrichtung weiterhin wenigstens einen Gelenkstift (4c) aufweist, der das untere Ende des Schwungrahmens (4, 4a, 4b, 4c) mit dem Fußbrett (3, 3a) schwenkbar verbindet.

6. Zusammenklappbarer Tretroller nach Anspruch 3, bei dem die stabilisierende Einrichtung ein Paar gegliederte Richtungshebel (8, 8a, 8b) umfaßt, die mit einer entfernbaren Feststelleinrichtung (9, 10) zur Fixierung des offenen Zustands der Lenkstange (6, 6a, 6b, 6c, 6d, 6f) ausgestattet ist.

7. Zusammenklappbarer Tretroller nach Anspruch 6, bei dem die Feststelleinrichtung eine Kerbe (9) aufweist, die für einen der Richtungshebel (8) vorgesehen ist, und der andere Richtungshebel mit einem hakenförmigen Ansatz versehen ist, der zusammen mit der Kerbe eine, Vorwärtsdrehung der Lenkstange (6, 6a, 6b, 6c, 6d, 6f) verhindert.

8. Zusammenklappbarer Tretroller nach Anspruch 7, bei dem die Feststelleinrichtung weiterhin eine Gleitmuffe (10) umfaßt`

9. Zusammenklappbarer Tretroller nach Anspruch 5, bei dem wenigstens ein Gelenkstift (4c) auf dem Fußbrett (3, 3a) in einem vorherbestimmten Abstand von der vorderen Welle (1a) rückwärtig angebracht ist.

10. Zusammenklappbarer Tretroller nach Anspruch 3, bei dem das Fußbrett (3, 3a) seitlich mit Einkerhungen (3a) versehen ist, die breit und lang genug sind, um als Sitze für die Aufnahme von der Stabilisiereinrichtung (8, 8a, 8b, 8c, 9, 10) zu dienen, wenn der Tretroller zusammengeklappt ist.

11. Zusammenklappbarer Tretroller nach einem der Ansprüche 1 bis 10, bei dem der Tretroller mit einem Vorderrad (1) und Doppelhinterrädern (2b) ausgestattet ist.

12. Zusammenklappbarer Tretroller nach einem der vorangehenden Ansprüche, bei dem die Lenkstange (6) wenigstens einen nach vorn ragenden C-förmigen gekrümmten Strang (6c) aufweist, der in einem Abstand von der vorderen Welle (1a) angeordnet ist, der dem Abstand zwischen der vorderen Welle (1a) und der hinteren Welle (2a) entspricht, und der gekrümmte Strang hinten eine entsprechende Einkerbung festlegt, die als Sitz für die Unterbringung der hinteren Welle (2a) dient, wenn im zusammengeklappten Zustand die Lenkstange (6) auf das Fußbrett (3, 3a) aufgelegt ist.

13. Zusammenklappbarer Tretroller nach Anspruch 12, wenn dieser von einem der Ansprüche 1 bis 10 abhängt, bei dem die Lenkstange (6) mit einem Zwischenabschnitt (6d) versehen ist, der als Sitz für das Hinterrad (2) dient, wenn der Schwungrahmen (4) und die Lenkstange (6) zusammengeklappt sind.

14. Zusammenklappbarer Tretroller nach Anspruch 13, bei den der Zwischenabschnitt ein Schlaufenelement (6d) aufweist.

15. Zusammenklappbarer Tretroller nach einem der vorangehenden Ansprüche, bei dem die obere Fläche des Fußbretts (3, 3a) eine Längsrille (11) aufweist, die sich in Ausrichtung mit dem Vorderrad (1) zentral erstreckt und als Sitz für die Lenkstange (6) dient, wenn letztere im zusammengeklappten Zustand auf das Fußbrett (3, 3a) aufgelegt ist.

16. Zusammenklappbarer Tretroller nach einem der vorangehenden Ansprüche, bei dem eine Handbremse (19, 20, 21) vorgesehen ist, die einen auf dem Lenkgriff (5) montierten Bremsgriff (19) aufweist und über Backen (21) und Kabel (20) auf das Hinterrad bzw. die Hinterräder (2, 2a) wirkt.

17. Zusammenklappbarer Tretroller nach einen der vorangehenden Ansprüche, bei dem das Fußbrett mit einer dazwischenliegenden Verengung (3a) versehen ist.

18. Zusammenklappbarer Tretroller nach einen der vorangehenden Ansprüche, bei dem eine Stoppeinrichtung vorliegt, die einen Hebel umfaßt, dem für ein peripheres Eingreifen auf das Vorderrad (1) vorgesehen ist.

19. Zussammenklappbarer Tretroller nach einen der vorangehenden Ansprüche, bei dem die Lenkeinrichtung auf beiden Seiten Paare gegenüberliegender Führungseinrichtungen (13) aufweist, die in das vordere Ende des Fußbretts (3, 3a) eingebracht sind, und jedes Paar der Führungseinrichtung als eine Aufnahme für das gleitende Einkuppeln eines entsprechenden Endes (12, 12, 12b) der vorderen Welle (1a) in die Aufnahme dient.

20. Zusamnenklappbarer Tretroller nach Anspruch 19, bei dem die Führungseinrichtung (13) eine bogenförmige Gestaltung hat, die den Lenkwinkel (A) des Fahrzeugs (S), vorzugsweise für jede Seite, in einen Bereich von etwa 20° bis etwa 30° bestimmt.

21. Zusammenklappbarer Tretroller nach Anspruch 20, bei dem die Führungseinrichtung (13) durch eine innere zylindrische Oberfläche (13a) und eine äußere zylindrische Oberfläche (13b) radial abgegrenzt ist, die koaxial angeordnet sind und deren Achse sich auf den mittleren Teil der Welle (1a) befindet.

22. Zusammenklappbarer Tretroller nach Anspruch 20 oder 21, bei dem der Raum, der durch die inneren und äußeren zylindrischen Oberflächen (13a, 13b) radial abgegrenzt und zwischen den gegenüberliegenden inneren Oberflächen der Führungseinrichtung (13, 13a, 13b) festgelegt ist, die Form von einem Paar Hohlabschnitte aus einem Idealzylinder mit einer inneren Höhe (H) hat, so daß die flachen Enden (12, 12a, 12b) der vorderen Wolle (1a) genau dahineinpassen.

23. Zusammenklappbarer Tretroller nach Anspruch 22, bei dem die Form des Raums, der innen durch die Führungseinrichtung (13, 13a, 13b) festgelegt ist, derart tat, daß peripherer Spielraum (P) zwischen den Enden (12, 12a, 12b) und der äußeren zylindrischen Oberfläche (13b) minimal gehalten wird.

24. Zusammenklappbarer Tretroller nach Anspruch 19, bei dem die vordere Welle (1) flache, bevorzugt als bogenförmiges T geformte Enden (12, 12a) aufweist.

25. Zusammenklappbarer Tretroller nach Anspruch 24, bei dem das flache Ende (12, 12a) der vorderen Welle (1a) mit einem Sitz für eine Kugel (16) ausgestattet sein kann, die in einer bogenförmigen Kerbe (15) der entsprechenden inneren Oberfläche der Führungseinrichtung (13) läuft, wobei die Kugel (16) vorzugsweise mit einer unter ihr liegenden Federeinrichtung (16a) zusammenwirkt.

26. Zusammenklappbarer Tretroller nach Anspruch 19, bei dem die vordere Welle (1a) mit einem Zahnradende (12b) ausgestattet sein kann, das in Eingriff mit einem gezahnten Abschnitt ist, der in dem oberen Teil der Führungseinrichtung (13) vorgesehen ist.

## Revendications

1. Trottinette repliable (S), comprenant un repose-pieds (3, 3a) ayant des roues avant et arrière (1, 2, 2b) et une barre de direction (6, 6a, 6b, 6c, 6d, 6f) reliée au dit repose-pieds (3, 3a) et assemblée de manière rotative à la roue avant (1) autour d'un axe horizontal, des moyens de charnière (6b, 4c) étant interposés entre ladite barre de direction (6, 6a, 6b, 6c, 6d, 6f) et ledit repose-pieds (3, 3a) pour faire osciller ladite barre de direction (6, 6a, 6b, 6c, 6d, 6f) autour d'un axe horizontal d'une position substantiellement verticale dans la configuration ouverte, à une position inférieure dans la configuration repliée dans laquelle la barre de direction (6, 6a, 6b, 6c, 6d, 6f) est orientée dans une direction substantiellement parallèle au repose-pieds (3, 3a), **caractérisée en ce que** lesdits moyens de charnière (6b, 4c) sont situés substantiellement de manière coaxiale au dit axe horizontal et en ce qu'une ossature de stabilisation oscillante (4, 4a, 4b, 4c) est associée à ladite barre de direction (6, 6a, 6b 6c, 6d, 6f).

2. Trottinette repliable suivant la revendication 1, dans laquelle lesdits moyens de charnière comprennent une paire de bagues (6b) enveloppant un arbre avant (1a) s'étendant sur ledit axe horizontal et situées sur les côtés opposés de ladite roue avant (1) couplée de manière rotative avec ledit arbre (1a).

3. Trottinette repliable suivant l'une des revendications précédentes, dans laquelle ladite ossature de stabilisation est dotée de moyens de stabilisation (8, 8a, 8b, 8c, 9, 10) pour fixer la barre de direction (6, 6a, 6b, 6c, 6d, 6f) dans la configuration ouverte.

4. Trottinette repliable suivant la revendication 3, dans laquelle ladite ossature oscillante (4, 4a, 4b, 4c) est connectée de manière pivotante à ses extrémités inférieures (4c) au reposepieds (3, 3a) et est munie d'une partie supérieure (4a) connectée de manière coulissante à la barre de direction (6, 6a, 6b, 6c, 6d, 6f).

5. Trottinette repliable suivant les revendications 1 et 4, dans laquelle lesdits moyens de charnière comprennent additionnellement au moins un axe de charnière (4c), connectant de manière pivotante l'extrémité inférieure de ladite ossature oscillante (4, 4a, 4b, 4c) au dit repose-pieds (3, 3a).

6. Trottinette repliable suivant la revendication 3, dans laquelle lesdits moyens de stabilisation comprennent une paire de leviers d'orientation articulés (8, 8a, 8b) équipés de moyens de fixation amovible (9, 10) pour fixer la position ouverte de la barre de direction (6, 6a, 6b, 6c, 6d, 6f).

7. Trottinette repliable suivant la revendication 6, dans laquelle lesdits moyens de fixation comprennent une encoche (9) prévue sur un desdits leviers d'orientation (8), l'autre levier d'orientation étant doté d'un appendice recourbé coopérant avec ladite encoche pour empêcher une rotation vers l'avant de la barre de direction (6, 6a, 6b, 6c, 6d, 6f).

8. Trottinette repliable suivant la revendication 7, dans laquelle lesdits moyens de fixation comprennent additionnellement une bague coulissante (10).

9. Trottinette repliable suivant la revendication 5, dans laquelle ledit au moins un axe de charnière (4c) est situé en arrière sur ledit repose-pieds (3, 3a) et à une distance prédéterminée dudit arbre avant (1a).

10. Trottinette repliable suivant la revendication 3, dans laquelle ledit repose-pieds (3, 3a) est doté latéralement d'échancrures (3a) suffisamment larges et longues pour servir de logements recevant les moyens de stabilisation (8, 8a, 8b, 8c, 9, 10) quand la trottinette est dis la configuration repliée.

11. Trottinette repliable suivant l'une des revendications 1 à 10, dans laquelle ladite trottinette est dotée d'une roue avant (1) et de roues arrières jumelées (2b).

12. Trottinette repliable suivant lune des revendications précédentes, dans laquelle ladite barre de direction (6) possède au moins une déviation (6c) en forme de C se projetant vers l'avant, située à une distance de l'arbre avant (1a) correspondant à la distance entre l'arbre avant (1a) et l'arbre artière (2a), ladite déviation définissant vers l'arrière une échancrure correspondante servant de logement pour loger l'arbre arrière (2a) quand la barre de direction (6) est posée sur le repose-pieds (3, 3a) dans la configuration repliée.

13. Trottinette repliable suivant la revendication 12 placée sous la dépendance de l'une des revendications 1 à 10, dans laquelle ladite barre de direction (6) est munie d'une partie intermédiaire (6d), servant de logement pour la arrière (2) quand l'ossature oscillante (4) et la barre de direction (6) sont dans la configuration repliée.

14. Trottinette repliable suivant la revendication 13, dans laquelle ladite partie intermédiaire comprend un élément de boucle (6d).

15. Trottinette repliable suivant l'une des revendications précédentes, dans laquelle la face supérieure du repose-pieds (3, 3a), possède une rainure longitudinale (11), s'étendant de manière centrale en alignement avec la roue avant (1) et servant de logement pour la barre de direction (6) quand cette dernière est posée sur le repose-pieds (3, 3a) dans la configuration repliée.

16. Trottinette repliable suivant l'une des revendications précédentes, dans laquelle un frein à main (19, 20, 21) est prévu, comprenant une poignée de frein (19) montée sur ladite poignée de direction (5) et agissant sur la(les) roue(s) arrière(s) (2, 2b) par l'intermédiaire de mâchoires de serrage (21) et d'un câble (20).

17. Trottinette repliable suivant l'une des revendications précédentes, dans laquelle le repose-pieds est muni d'un renfoncement intermédiaire (3a).

18. Trottinette repliable suivant l'une des revendications précédentes, dans laquelle des moyens d'arrêt sont prévus, comprenant un levier conçu pour intervenir de manière tangentielle à la roue avant (1).

19. Trottinette repliable suivant l'une des revendications précédentes, dans laquelle lesdits moyens de direction comprennent des paires bilatérales de moyens de guidage opposés (13) servant de logements insérés à l'intérieur de l'extrémité avant du repose-pieds (3, 3a), chaque paire de moyens de guidage servant de logement pour s'accoupler de manière glissante avec une extrémité (12, 12a, 12b) correspondante de l'arbre avant (1a).

20. Trottinette repliable suivant la revendication 19, dans laquelle lesdits moyens de guidage (13) possèdent une configuration en arc définissant l'angle (A) de direction du véhicule (S), de préférence, pour chaque côté, dans l'intervalle de 20° à 30° environ.

21. Trottinette repliable suivant la revendication 20, dans laquelle lesdits moyens de guidage (13) sont radialement délimités par une surface cylindrique intérieure (13a) et une surface cylindrique extérieure (13b), disposées de manière coaxiale et ayant leurs axes situés au niveau de la partie intermédiaire de l'arbre (1a).

22. Trottinette repliable suivant la revendication 20 ou 21, dans laquelle l'espace délimité de manière radiale par lesdites surfaces cylindriques intérieures et extérieures (13a, 13b) et défini entre les surfaces dressées intérieures opposées desdits moyens de guidage (13, 13a, 13b) adopte la forme d'une paire de parties creuses prises à partir d'un cylindre théorique ayant une hauteur interne (H) telle que les extrémités (12, 12a, 12b) horizontales de l'arbre avant (1a) s'y ajustent exactement.

23. Trottinette repliable suivant la revendication 22, dans laquelle la forme dudit espace défini de manière interne par les moyens de guidage (13, 13a, 13b) est tel que le jeu circonférentiel (P) entre les extrémités (12, 12a, 12b) et la surface cylindrique extérieure (13b) est maintenu minimal.

24. Trottinette repliable suivant la revendication 19, dans laquelle l'arbre avant (1) possède des extrémités (12, 12a) horizontales, de préférence adoptant la forme d'un T cintré.

25. Trottinette repliable suivant la revendication 24, dans laquelle l'extrémité (12, 12a) horizontale de l'arbre avant (1a) peut être équipée d'un logement pour une bille (16) roulant sur une rainure cintrée (15) de la surface interne correspondante des moyens de guidage (13), ladite bille (16) coopérant de préférence avec des moyens de ressort (16a) placés au dessous.

26. Trottinette repliable suivant la revendication 19, dans laquelle ledit l'arbre avant (1a) peut être doté d'une extrémité a roue dentée (12b) s'engrenant dans un secteur denté prévu dans la partie supérieure des moyens de guidage (13).
